Europäisches Patentamt

European Patent Office

Office européen des brevets

(19)

(11) **EP 0 852 217 A2**

(12) **EUROPEAN PATENT APPLICATION**

(43) Date of publication:
08.07.1998 Bulletin 1998/28

(51) Int. Cl.⁶: **B65H 59/40**, G01L 5/10

(21) Application number: 97310609.9

(22) Date of filing: 24.12.1997

(84) Designated Contracting States:
AT BE CH DE DK ES FI FR GB GR IE IT LI LU MC
NL PT SE
Designated Extension States:
AL LT LV MK RO SI

(30) Priority: 03.01.1997 GB 9700077
20.08.1997 GB 9717507

(71) Applicant:
New House Textiles Limited
How Caple, Herefordshire HR9 4SX (GB)

(72) Inventors:
• Stanier, Nicholas Johhn
How Caple, Herefordshire, HR9 4SX (GB)
• Harris, Robert Graham
Longlevens, Gloucester, GL2 9LB (GB)

(74) Representative:
Higgins, Michael Roger
A.R. Davies & Co.
27, Imperial Square
Cheltenham Glos. GL50 1RQ (GB)

(54) **A tension monitoring device**

(57) A yarn tension monitoring device comprises means 24 for deflecting a yarn out of a rectilinear path, the deflecting means being supported by, or being acted upon, by spring means so that tension forces in the yarn move the deflecting means against the urging force of the spring means, and means 28 for detecting the tension in the yarn in response to movement of the deflecting means and/or the force applied by the spring means.

FIG 3

## Description

This invention relates to a tension monitoring device and, more particularly but not exclusively, to such a device for monitoring individual yarn tension during warping or direct yarn feed processes (and in other textile, or related activities), so that a tensioner can be automatically adjusted to maintain a constant and uniform tension, thereby improving woven fabric quality, reduce fault rates, and allow the machine to operate at higher speeds than otherwise achievable.

Wire is braided by a weaving type of operation and the term "yarn" as used herein is intended also to cover wire.

A "warper" is a machine for preparing yarns ready for weaving by winding hundreds (sometimes thousands) of parallel yarns from individual bobbins onto a large spool known as a "beam" or a "warp beam". This beam forms the "warp" in weaving and warp knitting. In some instances, the yarns can be warped directly into the weaving machine.

The bobbins are held in an ordered fashion on a large frame known as a "creel" and drawn through a "tension unit" (located as close as practicable to the bobbin) to add just sufficient tension to allow the yarn to be kept under control. Creels can sometimes be 20 to 30 metres in length in order to accommodate large numbers of bobbins.

Tension variations in the yarns can cause problems. For example, fibres that exhibit elastomeric properties (such as nylon, polyester, etc) stretch under tension. If the tensions in individual yarns in the warp vary, once the fabric is woven and allowed to relax, the fabric can form ridges as the tensions are taken off the yarns. Extra processing, such as heat setting for example, has to be employed in order to make the fabric lie flat.

Many types of yarn tensioner have been developed and are in use today, but applied tension, although usually variable, is generally only measurable by hand. Therefore, setting up the creel to give even tension throughout the yarns can be a time consuming affair, with the relevant adjustments made while the creel is running. However, even when this is done, maintaining a constant and even tension throughout is extremely difficult as a number of well known and well documented factors come into play. For example, tension is effected by the size of the yarn package - as the bobbin runs down the tension can change, humidity and temperature, where the bobbin is placed on the creel, even which side of the creel the bobbin is placed or if the yarn has "Z" twist or "S" twist. Market conditions dictate that many mills produce shorter runs of a wider variety of fabric. Consequently, some mills need to change the yarns on their creels frequently.

Also, in warping different yarns, fibre types and count will often have different characteristics that require them to be warped under different tensions.

The present invention seeks to provide a solution to many of these problems.

According to the present invention there is provided a yarn tension monitoring device comprising means for deflecting a yarn out of a rectilinear path, the deflecting means being supported by, or being acted upon, by spring means so that tension forces in the yarn move the deflecting means against the urging force of the spring means, and means for detecting the tension in the yarn in response to movement of the deflecting means and/or the force applied to the spring means.

Preferably, the yarn is guided through guide means located on opposite sides of, and adjacent to, the deflecting means so that the deflection of the yarn by the deflecting means is localised.

In one embodiment, the deflecting means is supported by a leaf spring and a strain gauge is provided on the leaf spring to measure the force applied thereto by the tension in the yarn.

In a second embodiment, a Hall effect device and magnet can be used to measure the distance which the deflecting means is moved by the tension in the yarn.

In a third embodiment, the tension detecting means comprises a transformer having primary and secondary windings and a slidable ferrous element for inducing electro-magnetic coupling between the primary and secondary windings, the element being urged in one direction by the spring means and in an opposite direction by tension forces in the yarn.

Preferably, the yarn tension monitoring device has a plurality of yarn deflecting means and associated yarn tension detecting means for detecting the tension in a plurality of yarns simultaneously and, in this case, means may be provided for multiplexing signals from the yarn tension detecting means.

Preferably, means are provided for adjusting the tension in the yarn if the yarn tension detecting means produces a signal outside a predetermined range.

The invention monitors tension in each individual yarn and provides a signal for analysis and action, if need be. Computer software can be used to analyse the signals, and automatically, if desired, adjust a tension unit responsible for the tension in that yarn, thereby, maintaining an average level tension throughout the creel without the involvement of the operator. Universal tension adjustment of the whole creel will be possible.

The deflecting means can be mounted at the last point on the creel, where all the yarns are brought together, prior to being wound on the beam. This is the ideal position to measure tension as all yarns are an equal distance from the beam. Alternatively, the deflecting means can be embodied within the tension unit itself.

By providing an answer to the above quoted tension variance problems, this invention will offer other significant advantages over other currently available machinery. With some warper speeds capable of 1000 metre/minute, it is essential to rapidly detect broken ends to prevent "lost ends" (where the beam is not braked in time, and the broken thread is buried under the rest of the warp). Current stop-motions detect broken ends at the point where the broken end passes through the stop-motion. However, it is known that the majority of thread breakages occur at the bobbin or the tension unit. If this should occur, the consequent fall in tension to zero (or near zero) would be read as a "broken end" with a signal sent to the warper to stop winding before the end has actually passed through the detector. In this way, the invention will give a faster reaction time, in most cases, than a conventional stop-motion.

The upper limit to the speed a warper can operate is often dictated by the breaking point of the yarns used (or at least at the point at which the number of yarn breakage's is so great, the down time involved in repairing broken ends exceeds the productivity gain of faster warping). Studies have shown that the distribution of tensions within the individual yarns can occupy a wide band width. It can be demonstrated that it is the yarns at the top end of this band width that break the most frequently (i.e. the ones under the greatest tension). With this invention monitoring and controlling these tensions, the bandwidth will be significantly narrowed, reducing tension in the tensest yarns and thus lowering the possibility of breakage. Therefore, using this invention, it is now possible to run a warper at significantly higher speeds with the consequent increase in productivity.

For the first time, having the individual yarns monitored economically, and linked to software, it is possible to have a high level of reportage facilities. A print-out accompanying every beam, giving such information as the fault rate, or other such information of great value to the weaver or knitter can be used as part of a quality assurance scheme. Such facilities also allow the system to analyse its own fault rate, i.e. a consistent fault on one end could mean a faulty bobbin or tension unit.

The invention will now be more particularly described, by way of example, with reference to the accompanying drawings, wherein:

Figure 1 is a schematic view of one embodiment of a yarn tension monitoring device according to the present invention,

Figure 2 shows the forces applied to the yarn deflecting means of Figure 1 by tension in the yarn,

Figure 3 is a side view of another embodiment of a yarn tension monitoring device according to the present invention, and

Figure 4 is a sectional view of the transducer shown in Figure 3 on an enlarged scale.

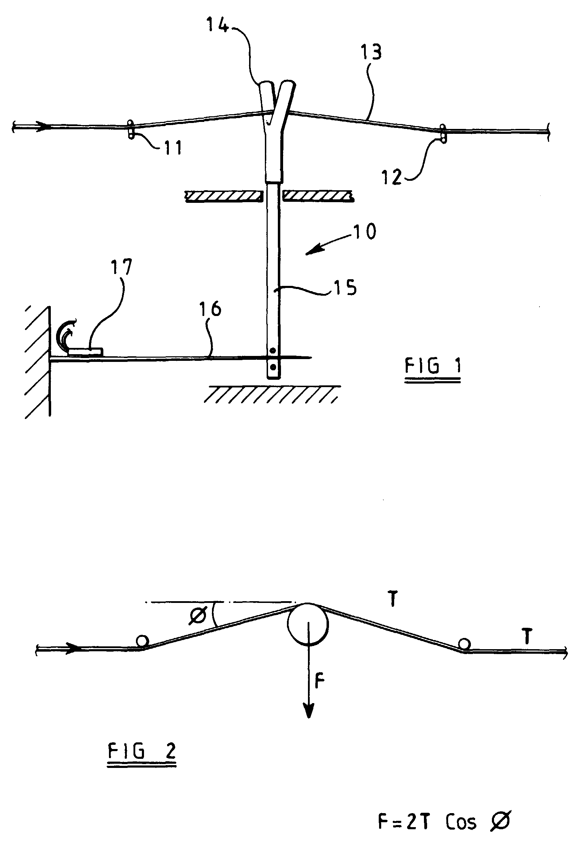

The tension measuring device 10 comprises of two guides in the form of fixed eyelets 11 and 12 through which the yarn 13 (or wire) can pass (arranged in a modular system so any number of devices can be arranged together as best suits the application or creel). Between these eyelets 11 and 12 the yarn passes through a Y-shaped ceramic deflector 14 (or similar) configured so that it deflects the passing yarn or wire out of a rectilinear path, such that force F (see Figure 2) is proportional to the tension in the yarn ( $F=2T\cos\theta$ ). The Y-shaped deflector 14 is located on a post 15 that is free to move a small distance in a vertical direction. The pest 15 is attached to one end to a flat stainless steel spring 16. The other end of this spring 16 is fixed in space so only the end connected to the Y-shaped deflector 14 is free to move. A strain gauge 17 (either of thin-film or ceramic) is fixed to the spring 16, such that deformations in the spring in response to the tension of the yarn passing through the Y-shaped deflector 14 generates a signal from the strain gauge 17 proportional to force F. This signal is amplified by an amplifier. If a ceramic strain gauge is used, the amplifier may be printed onto the spring, or, if a thin-film strain gauge is used, the amplifier may be, mounted separately on an adjoining PCB.

When large number of yarns are being monitored at the same time by individual tension monitoring devices, the signals may be multiplexed.

Other arrangements can be used for detecting the tension in the yarn in response to movement of the deflecting means and/or the force applied to the spring. For example, a magnet can be attached to the deflector and movement of the magnet can be detected by a Hall effect sensor. In this case, it may be necessary to mount the deflector in a different way and to spring urge it with a weaker spring.

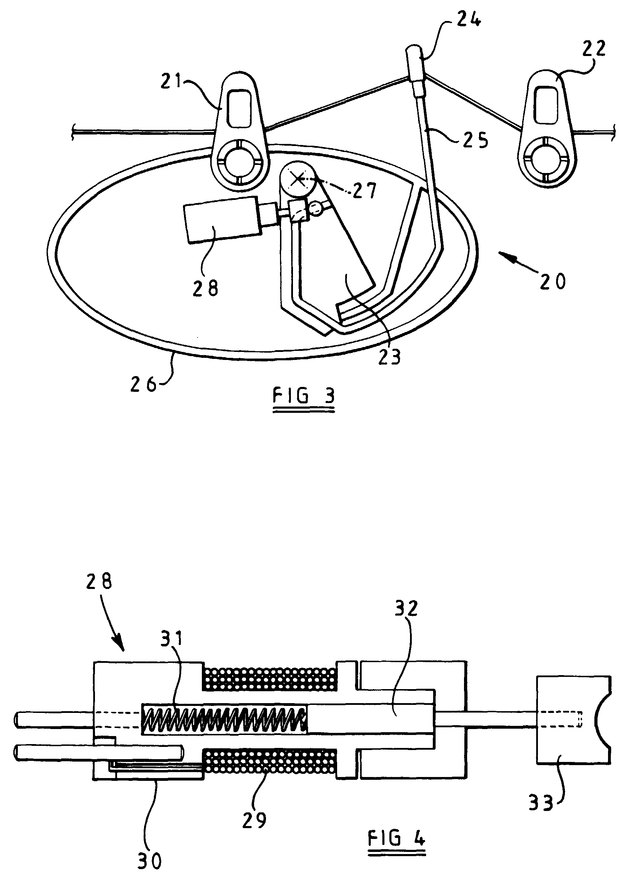

Referring now to Figures 3 and 4 of the drawings, the tension measuring device 20 shown therein comprises two guides or eyelets 21 and 22. A deflector 24 is disposed between the guides and is connected to a pivot 23 by a stiff length of wire 25. The pivot 23 is mounted in a housing 26 for pivotable movement about an axis 27.

A transducer 28 measures the movement of the pivot 23. As shown in Figure 4, the transducer 28 comprises a pair of coils, indicated generally at 29, which are uniformly wound over a non-conductive former 30. The former 30 has a central bore which carries a small instrument spring 31 and a sliding ferrous plunger 32. The plunger 32 has an end cap 33 which is urged against the pivot 23 by the spring 31. The spring rate is selected to permit a reasonable amount of plunger travel over the range of yarn tensions required to be measured, and the position of the plunger 32 in the bore, is directly proportional to the yarn tension. The length of the plunger 32 in the bore, and within the boundary of the two coils 29, determines the amount of electro-magnetic coupling between the two coils. One coil, the primary, is connected to an alternating excitation voltage, and the amount of coupling is given by the value of the induced voltage in the secondary coil. This measured voltage is therefore proportional to the plunger position, which in turn is proportional to the tension in the yarn.

As shown in the accompanying drawings, the yarn is deflected out of a rectilinear path through a relatively small angle. It could, however, be deflected through a much large angle.

**Claims**

1. A yarn tension monitoring device comprising means for deflecting a yarn out of a rectilinear path, the deflecting means being supported, or being acted upon, by spring means so that tension forces in the yarn move the deflecting means against the urging force of the spring means, and means for detecting the tension in the yarn in response to the movement of the deflecting means and/or the force applied to the spring means.

2. A yarn tension monitoring device as claimed in claim 1, wherein the yarn is guided through guide means located on opposite sides of, and adjacent to, the deflecting means so that the deflection of the yarn by the deflecting means is localised.

3. A yarn tension monitoring device as claimed in claim 1 or 2, wherein the deflecting means is supported by a leaf spring and a strain gauge is provided on the leaf spring to measure the force applied thereto by the tension in the yarn.

4. A yarn tension monitoring device as claimed in claim 1 or claim 2, wherein a Hall effect device and magnet is used to measure the distance which the deflecting means is moved by the tension in the yarn.

5. A yarn tension monitoring device as claimed in claim 1 or claim 2, wherein the tension detecting means comprises a transformer having primary and secondary windings and a slidable ferrous element for inducing electro-magnetic coupling between the primary and secondary windings, the element being urged in one direction by the spring means and in an opposite direction by tension forces in the yarn.

6. A yarn tension monitoring device as claimed in any one of the preceding claims, wherein a plurality of yarn deflecting means and associated yarn tension detecting means are provided for detecting the tension in a plurality of yarns simultaneously.

7. A yarn tension monitoring device as claimed in claim 6, wherein means are provided for multiplexing signals from the yarn tension detecting means.

8. A yarn tension monitoring device as claimed in any one of the preceding claims, wherein means are provided for adjusting the tension in the yarn if the yarn tension detecting means produces a signal outside a predetermined range.

FIG 1

FIG 2

$$F = 2T \, \text{Cos} \, \varnothing$$

FIG 3

FIG 4